# EUROPEAN PATENT APPLICATION

(11) **EP 1 298 514 A1**
(43) Date of publication of application: **02.04.2003**
(21) Application number: 01123485.3
(22) Date of filing: 28.09.2001
(51) Int. Cl.: G06F 1/00

(54) **A computer system and a method for managing access of an user to resources**

(71) Applicant: SIEMENS AKTIENGESELLSCHAFT, 80333 München (DE)
(72) Inventor: Bortoloso, Luca, IT-16151 Genova (IT); Dighero, Stefano, IT-16146 Genova (IT)

(57) **Abstract**

The invention relates to a method and a computer system comprising:
a first computer (B) comprising
   - first database means (5) for storing of users and/or of groups of users,
   - a number of script files (6) containing information descriptive of an user resource,
   - a centralized user manager program (4) for accessing the first database means and the script files,
a second computer (A) being coupled to the first computer comprising
   - an application program (31) for accessing a local user management program (3),
the local user management program being adapted to create a local resources database (8, 9) for a user after login of the user.

## Description

A computer system and a method for managing access of an user to resources

User management and authentication is a key issue in any Process Control System and Manufacturing Execution System. A variety of methods is known from the prior art for authenticating an user during a login procedure. Typically the system has a user database containing all authorized users along with their specific user profiles. The user profiles must contain all the information necessary to the system in order to control a user's access to any object or any operation provided by the system.

All PCS or MES solutions even if they are based on the same software package, are somewhat tailored to the specific costumer needs. For this reason, user management and authentication issues can be very different from costumer to costumer, or between different categories of applications or a different market.

It is therefore desirable that the user management service provides a comprehensive and at the same time flexible way to configure user profiles and to configure access policies for any object of the system - with any required level of granularity.

It is further desirable that any implementation of such an user management service can be performed without requiring heavy changes on the software packages used in the system, and that it provides a centralized environment to configure access policies.

For example, the security mechanisms provided by windows NT/2000 are used in prior art process control systems or MES packages. Alternatively relatively simple proprietary user management functions are used.

In the latter case, users are normally identified by a numerical number - normally called "access level". This number can be assigned to different objects (graphical displays, alarms, tags, files and so forth), or used within scripting languages to limit user access to specific objects or functions. A drawback of this approach is that it requires providing software applications that are "enabled" to handle this access level in a proper and flexible way.

A further drawback of this prior art approach is that it can not cope with all the requirements of the different customers within an industry category or of different industries categories. In fact, a users access management is basically embedded in any software package in a somewhat fixed way, and it is not possible to satisfy any costumer needs.

This means that the costumer must adapt his user management needs to the system, instead of having a system that can be configured to adapt itself to the customer needs. A further disadvantage of such prior art systems is that user access configuration is not centralized and thus therefore requires a large amount of information technology support resources.

It is therefore an object of the present invention to provide an improved computer system and method for managing access to resources of a user and/or a group of users. The underlying problem of the invention is solved basically by applying the features laid down in the independent claims. Preferred embodiments of the invention are given in the dependent claims.

The invention is particularly advantageous in that is allows to efficiently manage user access to resources and at the same time provide the highest level of flexibility.

In accordance with a preferred embodiment of the invention this is accomplished by means of script files being accessible by a centralized user manager program. The script files contain information descriptive of a user resource. By means of the script files it is possible to create, modify and update a user profile by editing his or hers assigned script file. The same is true for a group of users as a script file can be optionally assigned to an individual user or to a group of users.

In accordance with a further preferred embodiment of the invention the concept of named resources is used. Resources are "operations" that can be executed by system objects. Some operations can be very object specific, such as alarm acknowledging, tag write access etc., or can be more generic, e.g. modify configuration, save file, open file etc. A set of resources is assigned to each user profile. Any user can access all the resources specified in its assigned user profile, i.e. the user can perform all the operations corresponding to the enabled resources.

It is a further advantage of the present invention that each resource can have a different access level in different user profiles. This way access levels can be assigned to specific objects, such as files, tags, etc., handled by different system packages.

Named resources can correspond to any entity in this system (objects, operations, files, logical entities, physical entities, etc.) that can be engineered, configured, operated and displayed by the software packages. The access policies to these named resources are configured by writing one ore more script files.

It is a further advantage of the present invention that a simple syntax can be used for the script files and that the script files are managed centrally by an user management service. When a script file is needed by a particular user after login, the corresponding script file is automatically aligned on any client workstation.

The major advantages for the customer are:
1. The configuration of the access policies can be done in a centralized way for any object handled by the system.
2. This system allows to easily add new classes of resources and to handle third party resources in a very flexible way.
3. New policies and objects can be added very quickly, in a centralized way, without any reconfiguration of the software packages, thus allowing to easily scale the user management service.
4. The flexibility of the system is quite total, as it allows the customer (or system integrator) to develop even the most complex user authentication policies, only editing some text files.

In particular the invention allows to assign to each user profile or each single user a script file containing the list of named resources that can be accessed by the user or all users of that profile.

In accordance with a preferred embodiment of the invention named resources are identified by a qualifier to indicate the resources class such as graphic display and area, plant unit, alarm group, etc., and a flag indicating the access type, such as enable access or deny access.

In accordance with a further preferred embodiment of the invention the script file is a normal text file with a simple syntax. A user manager tool allows to assign the proper script file to any user or any user group.

When a user logs on to the system, the assigned script files are loaded locally on the workstation, so that they can be used by the user management service to authenticate it and to enable or deny access to specific objects or operations. Users can have more scripts assigned (as they can belong to more user profiles). The user manager tool will merge all the script files and will perform a consistency check.

In the following preferred embodiments of the invention are described in greater detail by making reference to the drawings in which
- FIG 1: is a block diagram of an embodiment of a computer system in accordance with the invention,
- FIG 2: is an embodiment of a method for managing access of an user to resources in accordance with the invention,
- FIG 3: is a block diagram of the computer system of FIG 1 after login, when a user requests access to a resource,
- FIG 4: is a flow chart corresponding to the computer system of FIG 3.

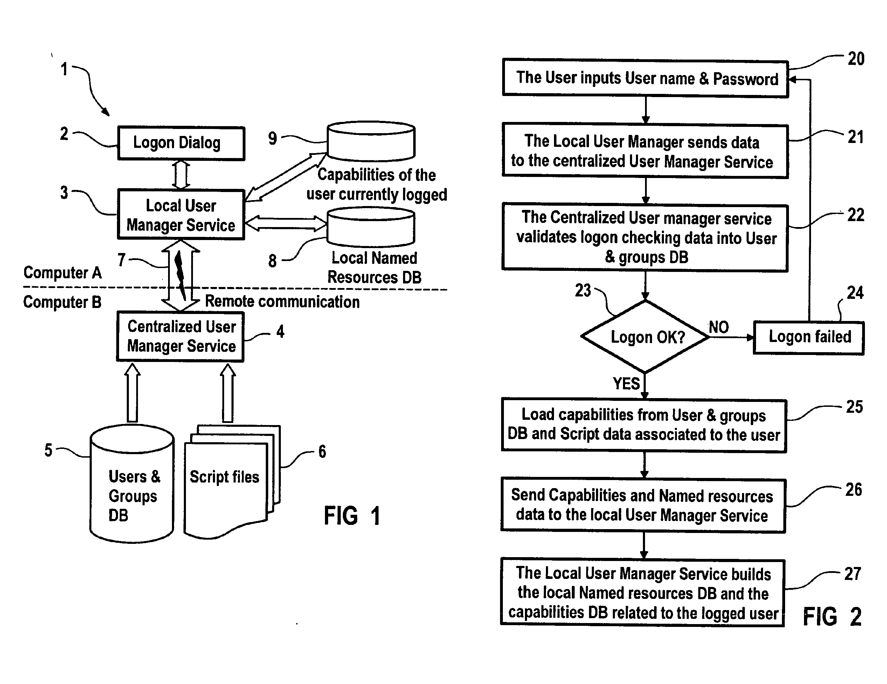

FIG 1 shows a computer system 1 comprising a central computer B and at least one user workstation computer A. The computer A comprises a logon dialog component 2 which is coupled to a local user management program 3 which provides for local user manager services.

The computer B has a centralized user manager program 4, which is coupled to an user database 5 and to a database 6 containing a number of script files. Each of the script files contains information descriptive of an user resource and is assigned to an user or to a group of users within the user database 5.

For the login procedure the user inputs his or hers user name and password into to logon dialog component 2. The user name and password is provided to the program 3 which sends this data to the program 4 of the computer B via a data link 7. In response the program 4 performs an access operation to the user database 5 in order to search the user database 5 for an entry of this user name and compare the passwords entered by the user into the logon dialog component 2 with a password stored in relation to the user name in the user database 5.
If the logon procedure failed, the program 4 provides a message to the program 3 which is displayed in the logon dialog component 2 to prompt the user to re-enter its correct user name and password.

If the logon procedure was successful the program 4 loads at least one or more script files from the database 6 which belong to the logged-in user. In addition the program 4 can load a description of user capabilities contained in an user profile stored in the user database 5.

It is advantageous that the script files contain named resources in order to identify those resources to which the user has access permission. In addition the script files can contain qualifiers for each resource in order to specify an allowed user action which an user can perform on the resource.

The information obtained from the database 5 and the database 6 are transmitted over the data link 7 to the computer A from the program 4. In response the program 3 creates an entry into a local named resources database 8 and a database 9 for storing the capabilities of the currently logged-in user.

Both databases 8 and 9 are locally stored on the computer A for direct access by the program 3.

In order to obtain the named resources of the logged-in user the corresponding script or scripts are parsed in order to extract the named resources associated to this user and also to identify the corresponding qualifiers, i.e. the access writes for the specified resources.

FIG 2 shows a corresponding flow chart. In step 20 the user inputs his or hers user name and password into the login dialog component. In step 21 the local user management program sends the user name and password to the centralized user manager program. Next the centralized user manager program validates the login information by accessing the user database and comparing the user name and password provided by the user with the corresponding information stored in the database. This is done in step 22.

In step 23 it is decided by the centralized user manager program whether the logon information provided by the user is ok or not. If it is not ok a message is created in step 24 and displayed to the user. Then the control goes back to step 20 for a renewed login attempt of the user.

If the login is ok the user capabilities are loaded by the centralized user manager program from the user profile contained in the user database. Further the script file or the script files being assigned to the user are loaded by the centralized user manager program. The data contained in the script or the scripts are parsed in order to extract the named resources associated to the user and the corresponding qualifiers.

In step 26 the capabilities and the named resources data is sent from the centralized user manager program to the local user management program on the users workstation.

In step 27 the local user management program creates the local named resources database and the capabilities database related to the logged-in user based on the information provided from the centralized user management program.

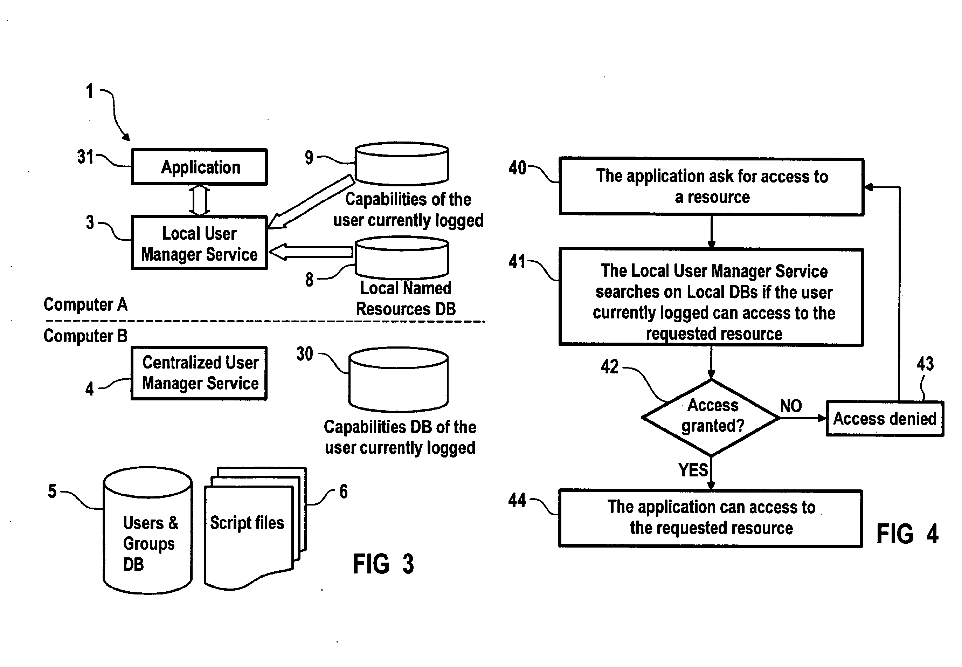

FIG 3 depicts a further preferred embodiment of the invention. Elements of the computer system of FIG 3 which corresponds to elements of the system of FIG 1 are denoted by the same reference numerals.

In addition to the computer system of FIG 1 the computer system of FIG 3 has a database 30 to store the capabilities of all users currently logged-in. In other words the database 30 is the summation of all databases 9. This way the database 30 centrally reflects the capabilities of all users being logged-on at a given point of time.

FIG 3 shows the computer system 1 in a state where the user has already logged-on and the databases 8 and 9 have been created. When the user requests access to a system resource by means of application program 31, this request is inputted into the local user management program 3.

In response the program 3 searches the local databases 8 and 9 in order to determine whether this user has the required access permissions for the requested resource. It is to be noted that this does not require access to the centralized user management program 4 as the required data is already locally stored in the databases 8 and 9. This is the advantage of increased response times and limitation of network traffic.

FIG 4 depicts a corresponding flow chart.

In step 40 the application requests access to a system resource. In step 41 the local user management program searches the databases 8 and 9 to determine if the logged-on user has access permission to the requested resource.

This determination is made in step 42. If the user does not have sufficient access rights, access is denied in step 43 and the control goes back to step 40.

If the contrary is the case the application is granted access to the requested resource. Again it is to be noted, that this procedure does not require access to the computer B (cf. FIG 3) as the required information is locally stored on the users workstation. This speeds up the granting of access to a requested resource and also increases the reliability of the system, for example considering interruptions in the data transmission between computer A and computer B in a manufacturing environment.

In accordance with a preferred embodiment of the invention each script file contains a list of named resources that can be accessed or can not be accessed by the user.

Resource qualifiers are necessary in order to indicate the resource class (it would be possible to have two resources with the same name, but a different meaning). Resource qualifiers are alphanumeric strings with a prefix ("."). E.g. .Action (jser action), .Unit (plant unit), etc. Some qualifiers could correspond to file extensions (if they indicate a file category). The .Action qualifier is used for the predefined resources (i.e. the resources already handled by the older user management system).

Some examples:
a) The action "Tag setting" could be applied to a list of pant areas or graphic displays.
b) The action "Modify and Save file" could be applied to all programming languages files, but not to the graphic displays files.

As far as the .Action qualifier is concerned, if no flag is provided, the "Access enabled" flag is considered by default. This could have different meanings depending on the resource ("open" for a file, "modify" for a project, etc.) Script files can contain also comments (preceded by a #).

### Examples of qualifiers:

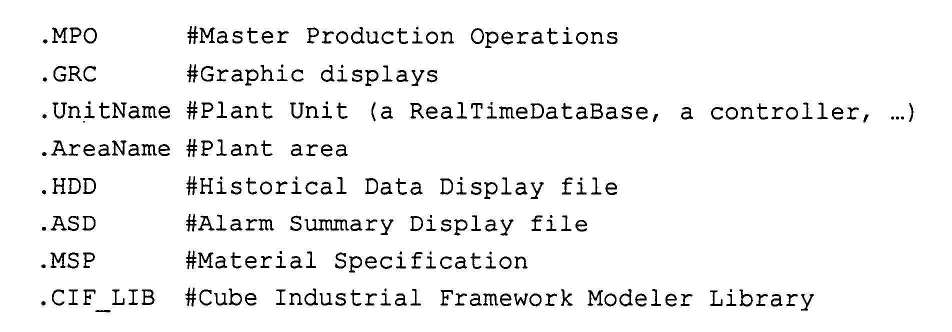

To deny access to a resource, the "!" symbol must be used. If it is the only symbol in the text line, it means that it denies access to all the resources listed in the following lines (until the "+" symbol).

A qualifier can be concatenated to the resource name, or be placed on a separate line. In this second case, it is taken as default qualifier for all the following lines (until the next qualifier).

### Example:

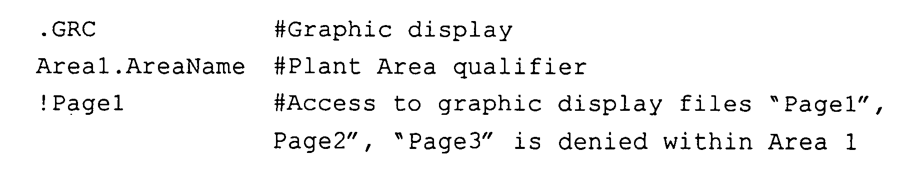

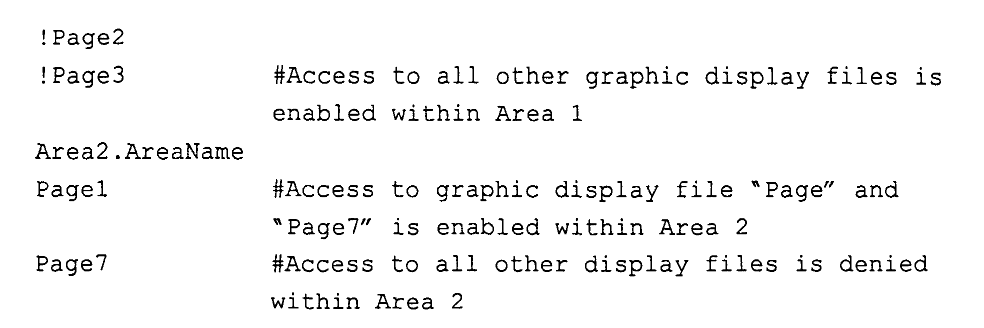

### The same policy can be expressed in the following way:

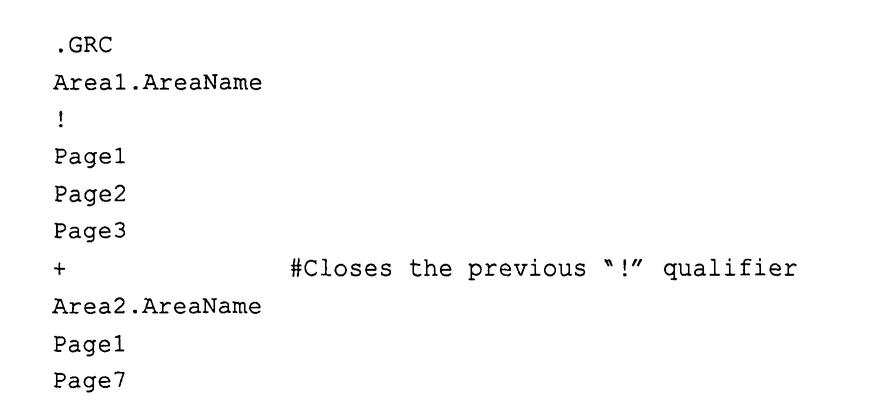

If the named resources is a file name, it must include the file path. It is possible to put the file path on a separate text line using the prefix "<". In this case, it is used as default file path for all the following named resources with no file path.

### Example:

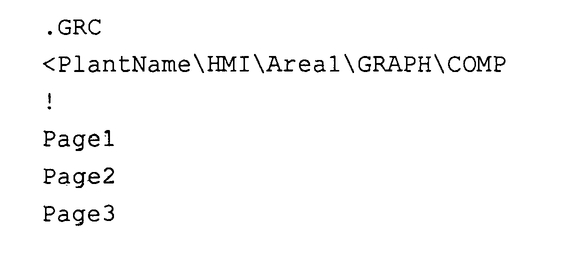

With some specific predefined qualifiers, it is not necessary to include the file path, as it is automatically determined by the system.

Named resources can contain "wild chars" ("*" and "!"). This can reduce the amount of the text lines needed to build a script file.

### Example:

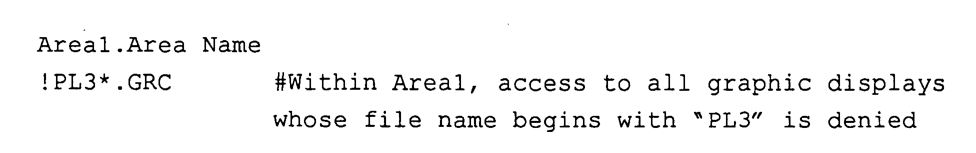

### Examples of Actions configuration:

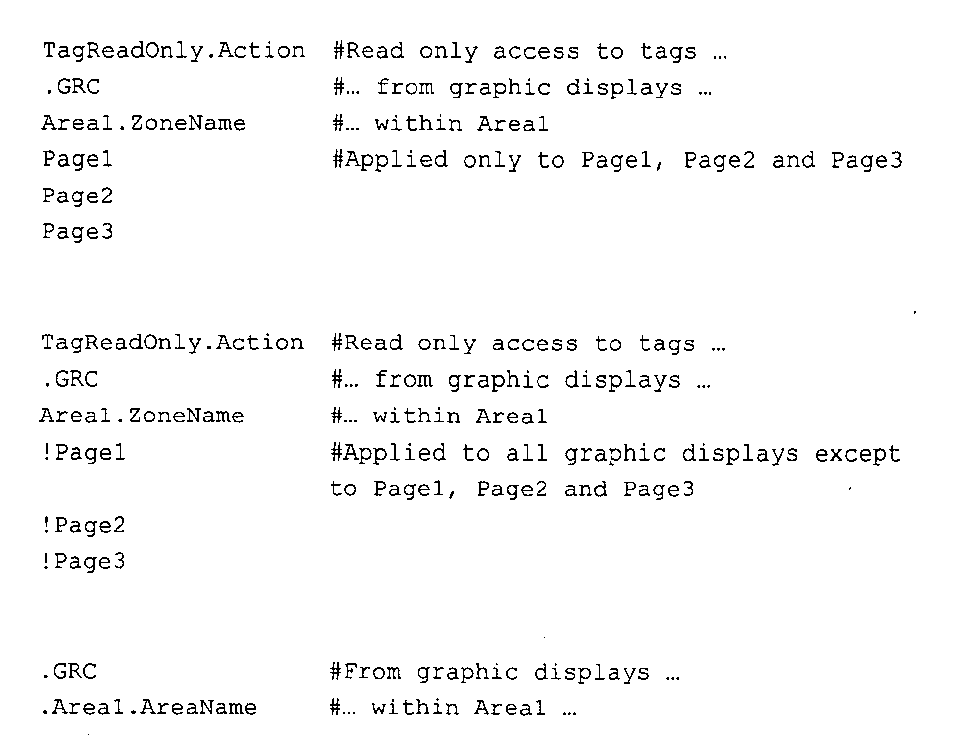

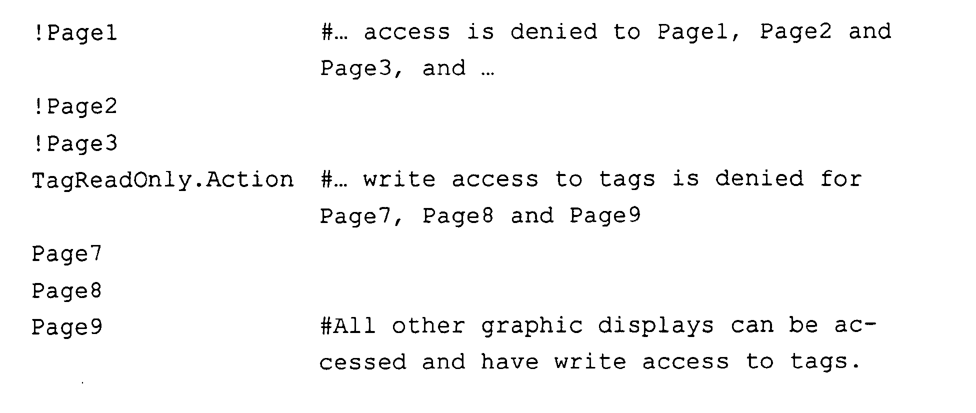

## Claims

1. A computer system comprising:
a first computer (B) comprising
- first database means (5) for storing of users and/or of groups of users,
- a number of script files (6) containing information descriptive of an user resource,
- a centralized user manager program (4) for accessing the first database means and the script files,
a second computer (A) being coupled to the first computer comprising
- an application program (31) for accessing a local user management program (3),
the local user management program being adapted to create a local resources database (8, 9) for a user after login of the user.

2. The computer system of claim 1, the local user management program being adapted to load the script files from the first computer after retrieval of the script files by the centralized user manager program.

3. The computer system of claim 1 or 2, the local user management program being adapted to create a local named resources database based on the script files.

4. The computer system of anyone of the proceeding claims 1, 2 or 3, at least some of the resources having an assigned qualifier to specify an allowed user action.

5. The computer system of anyone of the proceeding claims 1 to 4, the local user management program being adapted to access the local resources database upon an user access request to a resource after login of the user and after the initialisation of the computer system.

6. A method for managing access of an user or a group of users to resources of a computer system in accordance with anyone of the proceeding claims 1 to 5, the method comprising the steps of logging in a user by means of a request from the local user management program to the centralized user management program and an access operation of the centralized user management program to the first database means,
- loading a number of script files comprising information descriptive of allowed user resources to the second computer,
- building of the local resources database for the user by the local user management program.

7. A computer program product for performing a method in accordance with claim 6.
